# EUROPÄISCHE PATENTSCHRIFT

(11) **EP 3 250 440 B1**
(45) Veröffentlichungstag und Bekanntmachung des Hinweises auf die Patenterteilung: **21.04.2021**
(21) Anmeldenummer: 15766842.7
(22) Anmeldetag: 22.09.2015
(51) Int. Cl.: B62D 5/04, B62D 15/02

(54) **VORRICHTUNG ZUR EINBRINGUNG EINES HILFSDREHMOMENTS IN EINE LENKWELLE EINER ELEKTROMECHANISCHEN HILFSKRAFTLENKUNG**
APPARATUS FOR INTRODUCING AN AUXILIARY TORQUE INTO A STEERING SHAFT OF AN ELECTROMECHANICAL POWER STEERING SYSTEM
DISPOSITIF DESTINÉ À APPLIQUER UN COUPLE D'ASSISTANCE À UN ARBRE DE DIRECTION D'UNE DIRECTION ASSISTÉE ÉLECTROMÉCANIQUE

(30) Priorität: 28.01.2015 DE 102015000928
(43) Veröffentlichungstag der Anmeldung: 06.12.2017
(73) Patentinhaber: thyssenkrupp Presta AG, 9492 Eschen (LI); thyssenkrupp AG, 45143 Essen (DE)
(72) Erfinder: KNOLL, Peter, 88131 Lindau (DE); ERNSTSON, Gernot, A-6800 Feldkirch (AT)
(74) Vertreter: thyssenkrupp Intellectual Property GmbH
(86) Internationale Anmeldenummer: PCT/EP2015/071733
(87) Internationale Veröffentlichungsnummer: WO 2016/119923

(56) Entgegenhaltungen:
- EP-A1- 1 495 942
- EP-A1- 1 541 299
- EP-A2- 1 362 766
- DE-A1- 19 840 895
- GB-A- 2 402 916
- GB-A- 2 421 717

## Beschreibung

### Stand der Technik

Die Erfindung betrifft eine Vorrichtung zur Einbringung eines Hilfsdrehmoments und/ oder einen zusätzlichen Lenkwinkel in eine elektro-mechanische Hilfskraftlenkung, umfassend ein auf der Lenkwelle drehfest angebrachtes Zahnrad, welches mit einem Antriebselement eines Antriebsmotors in Wirkverbindung steht und von diesem drehend antreibbar ist, und einem Sensorelement, welches drehfest mit der Lenkwelle verbunden ist, wobei das Sensorelement und das Zahnrad an Kontaktflächen miteinander verbunden sind, wobei das Sensorelement stoffschlüssig mit dem Zahnrad verbunden ist, wobei das Zahnrad und das Sensorelement im Bereich der Kontaktflächen axial gegeneinander anliegen.

Bei einem Lenksystem eines Kraftfahrzeugs, welches als elektro-mechanische Hilfskraftlenkung ausgebildet ist, wird in Abhängigkeit von dem Lenkwinkel und dem Lenkmoment, welches der Fahrer auf das Lenkrad ausübt, von einem elektrischen Antrieb zusätzlich ein Hilfsmoment und/ oder einen zusätzlichen Lenkwinkel in die Lenkwelle eingekoppelt. Hierzu dient die gattungsgemäße Vorrichtung, die ein Getriebe aufweist, welches die Übertragung eines von dem elektrischen Antriebsmotor erzeugten Hilfsmoments auf die Lenkwelle ermöglicht. In bevorzugten Ausführungen ist hierzu das Zahnrad auf der Lenkwelle als Schneckenrad ausgebildet, welches mit einer Schnecke am Abtrieb des Antriebsmotors kämmt.

Das Lenkmoment wird mittels eines Drehmomentsensors ermittelt, und zwar konkret durch Messung des relativen Verdrehwinkels zwischen einer lenkradseitigen Eingangswelle und einer lenkgetriebeseitigen Ausgangswelle, die über einen Torsionsstab (Drehstab) mit definierter Torsionssteifigkeit drehelastisch miteinander verbunden sind. Der relative Verdrehwinkel und der Lenkwinkel, d.h. die absolute Winkelposition des Lenkeinschlags, wird mittels einer Sensoranordnung bestimmt, welche ein mit einem Abschnitt der Lenkwelle drehfest verbundenes Sensorelement umfasst, beispielsweise eine als Geber fungierende Magnetanordnung. Die Winkelposition des Sensorelements wird erfasst durch einen relativ zur drehbaren Lenkwelle feststehenden, eine Baugruppe bildenden elektronischen Messfühler, der beispielweise ein drehwinkelabhängiges Magnetfeld des Sensorelements erfasst und als elektrisches Messsignal ausgibt. Das Messsignal wird in einen Regler eingegeben, der den elektrischen Antrieb der elektro-mechanischen Hilfskraftlenkung ansteuert und so das einzubringende Hilfsdrehmoment bestimmt.

Im Stand der Technik ist es bekannt, die Sensoranordnung zur Winkelmessung in einer gattungsgemäßen Vorrichtung zur Einbringung eines Hilfsdrehmoments anzuordnen, und zwar insbesondere das mit der Lenkwelle verbundene Sensorelement. Aus der DE 10 2009 028 828 A1 ist es beispielsweise bekannt, eine Passfläche an der Lenkwelle auszubilden, auf welcher ein Sensorelement zur Bildung einer Presspassung thermisch aufgeschrumpft wird. Die Passfläche erfordert jedoch zwingend Bauraum, der in einer Vorrichtung zur Einbringung eines Hilfsdrehmoments nur eingeschränkt zur Verfügung steht; die Fertigung einer Passfläche ist zudem in nachteiliger Weise mit einem zusätzlichen Bearbeitungsschritt verbunden. Außerdem können Sensorelemente mit Befestigungselementen aus Kunststoff nur eingeschränkt mittels einer Presspassung dauerhaft und sicher befestigt werden. Eine weitere Möglichkeit zur Befestigung ist in der DE 10 2007 022 282 A1 beschrieben, nämlich das Sensorelement mittels eines UV-härtbaren Klebstoffs auf der Lenkwelle festzukleben. Allerdings muss hierbei ebenfalls Bauraum zur Verfügung stehen, und die Verklebung ist arbeits- und zeitaufwendig. Schließlich ist es aus der DE 10 2011 118 642 A1 bekannt, anstelle einer Passfläche zuerst ein Kunststoffteil auf der Lenkwelle anzubringen, beispielsweise durch Pressfügen, formschlüssiges Verbinden oder Spritzgießen, mit dem dann ein Kunststoffelement des Sensorelements stoffschlüssig verbunden wird. Bei diesem Vorgehen wird ebenfalls relativ viel Bauraum beansprucht. Außerdem ist der Fertigungs- und Bearbeitungsaufwand für die Bereitstellung und Anbringung des zusätzlichen Kunststoffelements an der Lenkwelle ebenfalls relativ hoch.

Aus der EP 1 541 299 A1 (nächstliegender Stand der Technik), EP 1 362 766 A2, GB 2 421 717 A, EP 1 495 942 A1, oder der GB 2 402 916 A sind weitere Bauformen von Sensoranordnungen für elektro-mechanische Hilfskraftlenkungen bekannt, die jedoch ebenfalls einen hohen Bearbeitungsaufwand erfordern oder relativ viel Bauraum beanspruchen.

Angesichts der vorangehend erläuterten Probleme im Stand der Technik ist es Aufgabe der vorliegenden Erfindung, eine Vorrichtung der eingangs genannten Art dahingehend zu verbessern, dass die Anbringung eines Sensorelements zuverlässig und mit geringerem Aufwand erfolgen kann.

### Darstellung der Erfindung

Zur Lösung der vorgenannten Problematik wird erfindungsgemäß vorgeschlagen, dass das Zahnrad und das Sensorelement jeweils zumindest im Bereich der Kontaktfläche aus Kunststoff ausgebildet sind und dass das Zahnrad mit dem Sensorelement verschweißt ist.

Erfindungsgemäß ist das Sensorelement unmittelbar mit dem Zahnrad, zumeist einem Schneckenrad, verbunden, welches in einer Vorrichtung zur Einbringung eines Hilfsdrehmoments der eingangs genannten Art immer vorhanden ist, und nicht, wie im Stand der Technik, jeweils eine eigene Verbindung zwischen dem Zahnrad und der Lenkwelle sowie dem Sensorelement und der Lenkwelle erfolgt. Mit anderen Worten liegt das Sensorelement im Bereich seiner Kontaktfläche mit seiner Oberfläche unmittelbar an der Oberfläche im Bereich der Kontaktfläche des Zahnrads an. Die Verbindung erfolgt entsprechend über eine Fügeverbindung im Bereich der Kontaktflächen, in der sich das Sensorelement und das Zahnrad kontaktieren. Daraus folgt, dass keine separate Befestigungseinrichtung auf der Lenkwelle zur Aufnahme des Sensorelements zur Verfügung gestellt werden muss, wie dies im Stand der Technik erforderlich ist. Entsprechend können das Zahnrad und das Sensorelement so dicht wie möglich beieinander angeordnet werden, so dass besonders wenig Bauraum beansprucht wird. Außerdem kann die im Stand der Technik erforderliche zusätzliche Bearbeitung der Lenkwelle zur Ausbildung einer Aufnahme für das Sensorelement entfallen. Dadurch werden der Herstellungsaufwand und die damit einhergehenden Kosten in vorteilhafter Weise reduziert.

Die Erfindung sieht weiter vor, dass das Sensorelement stoffschlüssig mit dem Zahnrad verbunden ist. Entsprechend wird im Bereich der Kontaktflächen ein Stoffschluss realisiert, der eine dauerhafte, unlösbare Verbindung bildet, die besonders haltbar ist und nur durch Zerstörung der miteinander verbundenen Teile trennbar ist. Die stoffschlüssige Verbindung hat weiterhin den Vorteil, dass keine aufwendige Bearbeitung oder Vorbereitung der Oberflächen von Sensorelement und Zahnrad im Bereich der Kontaktflächen erforderlich ist, und außerdem eine besonders kompakte Bauform realisiert werden kann.

Vorzugsweise wird eine stoffschlüssige Verbindung dadurch realisiert, dass das Zahnrad mit dem Sensorelement verschweißt ist. Die Verschweißung erfolgt, indem das Material des Zahnrads und des Sensorelements lokal an den aneinander angrenzenden Oberflächen im Bereich der Kontaktflächen durch Eintrag von Wärme an- bzw. aufgeschmolzen wird und sich in der Schmelzphase verbindet, so dass nach dem Abkühlen eine annähernd homogen durchgehende Materialstruktur ausgebildet wird, also praktisch ein einstückiges Bauelement entsteht. Die Verschweißung kann beispielsweise durch Ultraschall-Schweißen oder Reibschweißen erfolgen, wobei die gegeneinander anliegenden Kontaktflächen hochfrequent relativ zueinander bewegt werden und die dabei lokal erzeugte Reibungswärme für die eigentliche Verschweißung sorgt. Dabei handelt es sich um ein erprobtes Standardverfahren, welches mit geringem Aufwand und kurzen Taktzeiten eine zuverlässige stoffschlüssige Verbindung ermöglicht. Alternativ kann eine Laserverschweißung erfolgen, welche ebenfalls eine schnelle und sichere Verbindung ermöglicht, insbesondere auch bei unterschiedlichen und/oder komplexen Bauteilgeometrien der zu verbindenden Elemente.

Erfindungsgemäß ist das Zahnrad und das Sensorelement jeweils zumindest im Bereich der jeweiligen Kontaktfläche aus Kunststoff ausgebildet. Dabei können zumindest die im Bereich der Kontaktflächen gegeneinander anliegenden Oberflächen von Zahnrad und Sensorelement, d.h. die Fügeflächen, aus Kunststoffen bestehen, die hinsichtlich einer stoffschlüssigen Verbindung miteinander kompatibel sind. Damit ist gemeint, dass Zahnrad und Sensorelement ganz oder teilweise aus Kunststoffmaterialien gefertigt werden, welche hinsichtlich der Parameter, welche die Festigkeit einer stoffschlüssigen Verbindung definieren, wie beispielweise materialspezifisches Adhäsionsverhalten, Oberflächenbeschaffenheit etc., zueinander passen. Dadurch kann beispielsweise mittels Ultraschall- oder Laserschweißen eine Schweißverbindung erzeugt werden mit derselben Festigkeit wie die Kunststoffe selbst. Ein weiterer besonderer Vorteil ist, dass die Verwendung von Zahnrädern aus Kunststoff in gattungsgemäßen Vorrichtungen bekannt und erprobt ist, so dass im Wesentlichen der Kunststoff, aus dem die Umhüllung bzw. das Gehäuse des Sensorelements in seinen Eigenschaften daran angepasst werden muss, um eine optimale Verbindung zu realisieren.

Bevorzugt ist das Zahnrad als Kunststoff-Spritzgussteil auf die Lenkwelle aufgespritzt. Dabei wird die in der Regel aus Stahl bestehende Lenkwelle in einer Spritzgussform positioniert und über eine stoffschlüssige Verbindung in den flüssig eingespritzten Kunststoff unlösbar eingebettet. Vorzugsweise können an dem Abschnitt der Lenkwelle zusätzliche Formschlusselemente vorgesehen sein, welche die Festigkeit der Verbindung nochmals erhöhen und eine reproduzierbare relative Orientierung von Zahnkranz und Lenkwelle vereinfachen. Bei der erfindungsgemäßen Anordnung wird die auf diese Weise gebildete, besonders beanspruchbare Kunststoff-Stahl-Verbindung für die Integration des Sensorelements in eine gattungsgemäße Vorrichtung mittels einer einfach darstellbaren und besonders sicheren stoffschlüssigen Kunststoff-Kunststoff-Verbindung genutzt.

Es ist zweckmäßig, dass das Sensorelement eine ringförmige Grundform aufweist, die koaxial auf der Lenkwelle angeordnet ist und eine sich im Wesentlichen ringförmig erstreckende Kontaktfläche aufweist. Die ringförmige Grundform ergibt sich bei einer im Stand der Technik bekannten Sensoranordnung durch über den Umfang koaxial um die Lenkwelle verteilt angeordneten magnetischen Flussleitern. Diese sind bevorzugt in einem Grundkörper bzw. Gehäuse aus Kunststoff angeordnet, welches die Oberfläche zur Verbindung mit dem Zahnrad, d.h. die Kontakt- bzw. Fügefläche aufweist. Diese kann ringförmig umlaufend ausgebildet sein, wodurch eine optimale Positionierung und zuverlässige Befestigung des Sensorelements mit geringem Fertigungsaufwand sichergestellt werden kann.

Das Zahnrad und das Sensorelement können im Bereich der Kontaktflächen vorzugsweise axial gegeneinander anliegen. Dabei weisen die Kontaktflächen Axialflächen auf, welche dadurch realisiert wird, dass am Zahnrad und am Sensorelement als Fügeflächen miteinander korrespondierende, in axialer Richtung gegeneinander in Kontakt bringbare Oberflächen vorgesehen werde, beispielsweise eine axiale Ringfläche, die mit einem umlaufenden Absatz oder einer axialen Stirnfläche verbunden wird. Ein Vorteil dieser Anordnung ist, dass das Zahnrad ohnehin eine scheibenförmige Grundform hat, an der einfach als Kontaktflächen geeignete Axialflächen ausgebildet werden können. Ein weiterer Vorteil ist, dass die in der gegeneinander anliegenden Kontaktflächen für eine Verschweißung mittels Ultraschallschweißen besonders gut zugänglich sind. Die zum Schweißen erforderliche Anregung kann nämlich durch eine ring- oder rohrabschnittförmige Sonotrode erfolgen, die koaxial über die Lenkwelle geführt wird und das Sensorelement axial gegen das Zahnrad anpresst.

In einer vorteilhaften Ausgestaltung weisen das Sensorelement und das Zahnrad formschlüssig miteinander in Eingriff bringbare Formschlusselemente auf. Diese dienen zur relativen Positionierung, insbesondere für die Zentrierung des Sensorelements relativ zum Zahnrad und damit relativ zur Lenkwelle. Beispielsweise kann ein Formschlusselement durch einen axial aus dem Zahnrad vorstehenden Vorsprung gebildet werden, auf den axial ein ringförmiger Grundkörper eines Sensorelements aufschiebbar ist. Während das Sensorelement auf dem Vorsprung in radialer Richtung positioniert, d.h. zentriert ist, ist es radial definiert in Montagestellung positioniert, wenn es axial gegen die Oberfläche, d.h. die axial gegenüberliegende Kontaktfläche am Zahnrad anschlägt. Damit wird bei der Durchführung einer stoffschlüssigen Befestigung, beispielsweise durch Schweißen oder Kleben, eine eindeutig definierte, exakte Positionierung des Sensorelements relativ zum Zahnrad sichergestellt.

Es ist weiterhin vorteilhaft, dass das Zahnrad und das Sensorelement in einem Gehäuse angeordnet sind, an dem relativ zum Sensorelement feststehend eine Baugruppe einer Sensoranordnung positioniert ist. Die Baugruppe kann zur Aufnahme von Messignalen des Sensorelements dienen, und kann als Messfühler zur Detektion von Winkelverstellungen des Sensorelements ausgestaltet sein, beispielsweise als Magnetfeldsensor für ein Sensorelement mit einer winkelabhängigen Magnetanordnung. Die Baugruppe ist relativ zum drehbaren Sensorelement über das Gehäuse der Vorrichtung fest an der Karosserie des Fahrzeugs angeordnet und ermöglicht somit die Erfassung relativer Winkeländerungen bei einer Verdrehung der Lenkwelle. Durch die Integration der Baugruppe ist eine besonders kompakte Bauform der Vorrichtung realisierbar.

Die Aufgabe wird ebenfalls durch ein Verfahren entsprechend Anspruch 9 gelöst.

Es wird ein Verfahren zur Herstellung einer Vorrichtung zur Einbringung eines Hilfsdrehmoments und/oder eines zusätzlichen Lenkwinkels in eine Lenkwelle einer elektro-mechanischen Hilfskraftlenkung vorgeschlagen, wobei das Verfahren folgende Verfahrens-schritte umfasst: Bereitstellen eines zumindest im Bereich einer Kontaktfläche aus Kunststoff ausgebildeten Zahnrades für eine elektro-mechanische Hilfskraftlenkung, Bereitstellen eines zumindest im Bereich einer Kontaktfläche aus Kunststoff ausgebildeten Sensorelements für eine Sensoranordnung, Positionierung des Sensorelements an oder auf dem Zahnrad in einer vorbestimmten Anordnungsposition, Herstellung einer unlösbaren stoffschlüssigen Verbindung zwischen dem Sensorelement und dem Zahnrad, wobei das Zahnrad und das Sensorelement im Bereich der Kontaktflächen axial gegeneinander anliegen, wobei das Zahnrad mit dem Sensorelement verschweißt wird.

Bei der Positionierung des Sensorelements an bzw. auf dem Zahnrad wird das Sensorelement in die Position gebracht, in der das Sensorelement fixiert, d.h. mit dem Zahnrad verbunden werden soll. Bevorzugt erfolgt die Posionierung durch ein Aufschieben oder Aufpressen des Sensorelements auf einen Vorsprung des Zahnrads. Das Aufschieben oder Aufpressen des Sensorelements kann dabei bevorzugt auf Block, also bis zu einem Anschlag, erfolgen. Dies bietet den Vorteil, dass das Sensorelement ohne besonderen Aufwand positioniert werden kann.

Bevorzugt erfolgt die Herstellung der unlösbaren Verbindung zwischen dem Sensorelement und dem Zahnrad stoffschlüssig. Dies kann beispielsweise durch Laserschweissen, Ultraschallschweissen oder durch Kleben erfolgen.

### Beschreibung der Zeichnungen

Vorteilhafte Ausführungsformen der Erfindung werden im Folgenden anhand der Zeichnungen näher erläutert. Im Einzelnen zeigen:
- Figur 1: eine schematische perspektivische Darstellung eines Lenksystems eines Kraftfahrzeugs mit einer Hilfskraftunterstützung;
- Figur 2: einen schematischen Schnitt durch eine Vorrichtung zur Einbringung eines Hilfsdrehmoments in eine Lenkwelle;
- Figur 3: eine schematische perspektivische Ansicht einer Vorrichtung gemäß Figur 2 in teilweise auseinandergenommenen Zustand;
- Figur 4: einen schematischen Längsschnitt entlang der Längsachse der Lenkwelle einer Vorrichtung gemäß Figur 2;
- Figur 5: eine schematische perspektivische Darstellung des Zahnrads mit einem darauf montierten Sensorelement;
- Figur 6: eine Darstellung wie in Figur 5 mit entfernt dargestellten Sensorelement:
- Figur 7: eine schematische perspektivische Darstellung eines Sensorelements für eine Vorrichtung gemäß einer der vorangehenden Figuren;
- Figur 8: einen schematischen Längsschnitt entlang der Längsachse der Lenkwelle einer Teilanordnung aus Figur 5;
- Figur 9: eine Detaildarstellung aus Figur 8 in einer ersten Ausführungsform;
- Figur 10: eine Detaildarstellung aus Figur 8 in einer zweiten Ausführungsform;
- Figur 11: eine Detaildarstellung aus Figur 8 in einer dritten Ausführungsform.

### Ausführungsformen der Erfindung

In den verschiedenen Figuren sind gleiche Teile stets mit den gleichen Bezugszeichen versehen und werden daher in der Regel auch jeweils nur einmal benannt bzw. erwähnt.

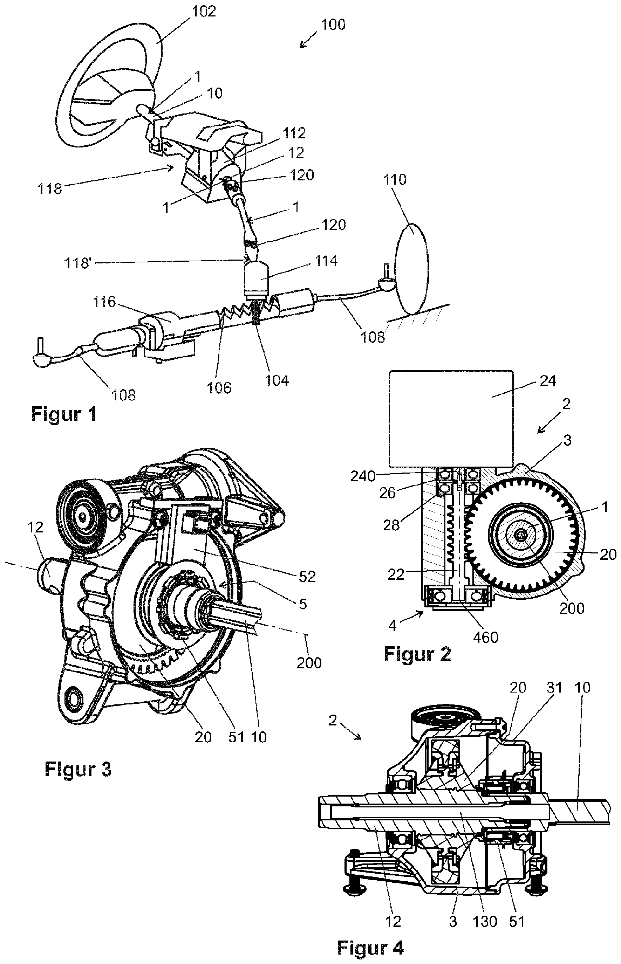

In Figur 1 ist eine Kraftfahrzeuglenkung 100 schematisch dargestellt, wobei ein Fahrer über ein Lenkrad 102 ein entsprechendes Lenk-Drehmoment (Lenkmoment) als Lenkbefehl in eine Lenkwelle 1 einbringen kann. Das Lenkmoment wird über die Lenkwelle 1 auf ein Lenkritzel 104 übertragen, welches mit einer Zahnstange 106 kämmt, die dann ihrerseits über eine Verschiebung der Spurstangen 108 den vorgegebenen Lenkwinkel auf die lenkbaren Räder 110 des Kraftfahrzeugs überträgt.

Eine elektrische Hilfskraftunterstützung kann in Form einer eingangsseitig mit der Lenkwelle 1 gekoppelten Hilfskraftunterstützung 112, einer mit dem Ritzel 104 gekoppelten Hilfskraftunterstützung 114 und/oder einer mit der Zahnstange 106 gekoppelten Hilfskraftunterstützung 116 vorgesehen sein. Die jeweilige Hilfskraftunterstützung 112, 114 oder 116 koppelt ein Hilfsdrehmoment in die Lenkwelle 1 und/oder das Lenkritzel 104 und/oder eine Hilfskraft in die Zahnstange 106 ein, wodurch der Fahrer bei der Lenkarbeit unterstützt wird. Die drei unterschiedlichen, in der Figur 1 dargestellten Hilfskraftunterstützungen 112, 114 und 116 zeigen mögliche Positionen für deren Anordnung.

Üblicherweise ist nur eine einzige der gezeigten Positionen mit einer Hilfskraftunterstützung 112, 114 oder 116 belegt. Das Hilfsdrehmoment bzw. die Hilfskraft, welche zur Unterstützung des Fahrers mittels der jeweiligen Hilfskraftunterstützung 112, 114 oder 116 aufgebracht werden soll, wird unter Berücksichtigung eines von einem Drehmomentsensor 118 ermittelten, vom Fahrer eingebrachten Lenkmoments bestimmt. Alternativ oder in Kombination mit der Einbringung des Hilfsdrehmoments kann von der Hilfskraftunterstützung 112, 114, 116 ein zusätzlicher Lenkwinkel in das Lenksystem eingebracht werden, der sich mit dem vom Fahrer über das Lenkrad 102 aufgebrachten Lenkwinkel summiert.

Die Lenkwelle 1 weist eingangsseitig eine mit dem Lenkrad 102 verbundene Eingangswelle 10 und ausgangsseitig eine mit der Zahnstage 106 über das Lenkritzel 104 verbundene Ausgangswelle 12 auf. Die Eingangswelle 10 und die Ausgangswelle 12 sind drehelastisch über einen in der Figur 1 nicht zu erkennenden Drehstab 130 (siehe Figur 4) miteinander gekoppelt. Damit führt ein von einem Fahrer über das Lenkrad 102 in die Eingangswelle 10 eingetragenes Drehmoment immer dann zu einer Relativdrehung der Eingangswelle 10 bezüglich der Ausgangswelle 12, wenn die Ausgangswelle 12 sich nicht exakt synchron zu der Eingangswelle 10 dreht. Diese Relativdrehung zwischen Eingangswelle 10 und Ausgangswelle 12 kann über einen Drehwinkelsensor gemessen werden und entsprechend aufgrund der bekannten Torsionssteifigkeit des Drehstabes 130 ein entsprechendes Eingangsdrehmoment relativ zur Ausgangswelle 12 bestimmt werden. Auf diese Weise wird durch die Bestimmung der Relativdrehung zwischen Eingangswelle 10 und Ausgangswelle 12 der Drehmomentsensor 118 ausgebildet. Ein solcher Drehmomentsensor 118 ist prinzipiell bekannt und kann beispielsweise eine elektromagnetischen Sensoranordnung, wie sie weiter unten beschrieben wird, oder durch eine andere Messung der Relativverdrehung realisiert werden.

Entsprechend wird ein Lenkmoment, welches von dem Fahrer über das Lenkrad 102 auf die Lenkwelle 1 beziehungsweise die Eingangswelle 10 aufgebracht wird, nur dann den Eintrag eines Hilfsdrehmoments durch eine der Hilfskraftunterstützungen 112, 114, 116 bewirken, wenn die Ausgangswelle 12 gegen den Drehwiderstand des Drehstabs 130 relativ zu der Eingangswelle 10 verdreht wird.

Der Drehmomentsensor 118 kann auch alternativ an der Position 118' angeordnet sein, wobei dann die Durchbrechung der Lenkwelle 1 in Eingangswelle 10 und Ausgangswelle 12 und die drehelastische Kopplung über den Drehstab 130 entsprechend an einer anderen Position vorliegt, um aus der Relativverdrehung der über den Drehstab 130 mit der Eingangswelle 10 gekoppelten Ausgangswelle 12 eine Relativdrehung und damit entsprechend ein Eingangsdrehmoment und/oder ein einzubringendes Hilfsdrehmoment bestimmen zu können.

Die Lenkwelle 1 in der Figur 1 umfasst weiterhin mindestens ein kardanisches Gelenk 120, mittels welchem der Verlauf der Lenkwelle 1 im Kraftfahrzeug an die räumlichen Gegebenheiten angepasst werden kann.

In Figur 2 ist eine schematische Schnittdarstellung einer Vorrichtung 2 zum Einbringen eines Hilfsdrehmoments in eine Kraftfahrzeuglenkung 100 gezeigt. Ein Zahnrad 20, hier ein Schneckenrad, ist vorgesehen, welches mit einer Lenkwelle 1, die schematisch gezeigt ist, verbunden ist. Eine Drehung des Zahnrades 20 um seine Rotationsachse 200, die auch als Zahnrad- bzw. Schneckenradachse 200 bezeichnet wird, die hier durch die Lenkwelle 1 ausgebildet ist, bewirkt die Einbringung eines Hilfsdrehmoments in die Lenkwelle 1, um entsprechend eine Hilfskraft beziehungsweise einen Zusatzlenkwinkel in den Lenkstrang einzubringen.

Das Zahnrad 20 wird über eine Antriebsschnecke 22 angetrieben, welche ihrerseits über einen schematisch dargestellten Elektromotor 24 angetrieben ist, wobei der Abtrieb 240 des Elektromotors 24 entsprechend zur Drehmomentübertragung mit der Antriebsschnecke 22 gekoppelt ist. Die Achse der Antriebsschnecke 22 und die Zahnradachse 200 schneiden sich dabei nicht. Die Antriebsschnecke 22 ist bevorzugt aus gehärtetem Stahl gefertigt.

In der Schnittdarstellung der Figur 2 ist ein Gehäuse 3 der Vorrichtung 2 zum Einbringen eines Hilfsdrehmoments gezeigt, wobei das Gehäuse 3 ein erstes Wälzlager 26 aufnimmt, welches die Abtriebswelle 240 des Elektromotors 24 radial abstützt. Weiterhin ist ein zweites Wälzlager 28 vorgesehen, in welchem das antriebsseitige Ende der Antriebsschnecke 22 radial abgestützt ist.

Das dem Abtrieb 240 des Elektromotors 24 gegenüberliegende Ende 460 der Antriebsschnecke 22 ist in einer Lagervorrichtung 4 gelagert, welche neben der radialen Lagerung der Antriebsschnecke 22 auch einen Winkelausgleich ermöglicht.

Figur 3 und 4 zeigen ebenfalls die Vorrichtung 2, wobei in der perspektivischen Ansicht von Figur 3 zur besseren Übersicht der Gehäusedeckel 31 weggelassen ist. Darin ist eine Sensoranordnung 5 erkennbar, die ein drehfest mit dem Zahnrad 20 verbundenes Sensorelement 51 und eine diesem zugeordnete Baugruppe 52 umfasst, die relativ zum Zahnrad 20 feststehend am Gehäuse 3 befestigt ist. Die Baugruppe 52 dient einerseits dazu, ein von dem Sensorelement 51 abgegebenes Messsignal aufzunehmen und an eine Steuerung zu leiten, und kann andererseits so ausgestaltet und relativ zum Sensorelement 51 positioniert sein, dass damit eine Winkelposition des Sensorelements 51 relativ zum Gehäuse 3, und damit die Winkelstellung des Zahnrads 20 und der Lenkwelle 1 gemessen werden kann, beispielsweise indem die Baugruppe 52 ein winkelabhängiges Magnetfeld des Sensorelements 51 erfasst.

Der Schnittdarstellung von Figur 4 ist entnehmbar, dass das Zahnrad 20 auf der Ausgangswelle 12 der Lenkwelle 1 befestigt ist. Die Ausgangswelle 12 ist über den Drehstab 130 mit der Eingangswelle 10 der Lenkwelle 1 drehelastisch verbunden. Das Sensorelement 51 ist in der gezeigten Ausführung fest mit der Ausgangswelle 12 verbunden, in alternativen Ausführungen kann es auch mit der Eingangswelle 10 verbunden sein. Die Eingangswelle 10 weist eine koaxial in dem Sensorelement 51 angeordnete, in der Zeichnung nicht im Einzelnen dargestellte Magnetanordnung auf. Wird vom Fahrer ein Lenkmoment über das Lenkrad 102 in die Eingangswelle 10 eingebracht, verdreht sich diese sich relativ zur Ausgangswelle 12. Diese relative Verdrehung der Magnetanordnung, die abhängig ist vom durch den Fahrer eingebrachten Lenkmoment, wird mittels des Sensorelements 51 erfasst und als Regelgröße zur Bestimmung des Hilfsdrehmoments genutzt, welches von dem Elektromotor 24 über die Antriebsschnecke 22 und das Zahnrad 20 auf die Ausgangswelle 12 übertragen wird.

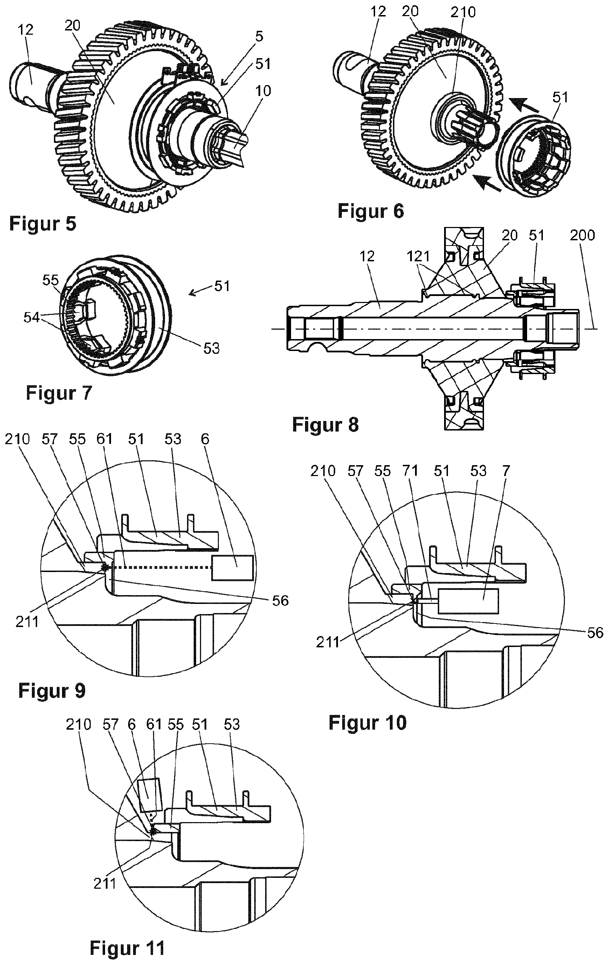

Das in Figur 7 einzeln dargestellte Sensorelement 51 hat einen im Wesentlichen ringförmigen Grundkörper 53, der aus bevorzugt im Wesentlichen aus Kunststoff ausgebildet ist, vorzugsweise als Kunststoff-Spritzgussteil. An dem Grundkörper 53 können Bauteile der eigentlichen elektrischen Messanordnung angebracht sein, beispielsweise in Form von über den Umfang verteilten Statorblechen 54, die in den Kunststoff eingebettet und in der Zeichnung nur schematisch angedeutet sind.

Der ringförmige Grundkörper 53 wird koaxial auf die Lenkwelle 1 aufgesetzt, beispielsweise auf die Ausgangswelle 12, und in axialer Richtung gegen das Zahnrad 20 bewegt, wie dies in Figur 6 mit dem Pfeil angedeutet ist. Dabei wird ein an dem Grundkörper 53 stirnseitig ausgebildeter rohrförmiger Ansatz 55 formschlüssig in axialer Richtung auf einen stirnseitig an dem Zahnrad 20 ausgebildeten zylindrischen Vorsprung 210 aufgeschoben bzw. aufgepresst, wobei das Sensorelement 51 relativ zum Zahnrad 20 und damit auch zur Ausgangswelle 12 zentriert ist und eine gewisse Vorspannung zwischen dem Vorsprung 210 und dem Ansatz 55 besteht.

Die Endposition bei der Anbringung des Sensorelements 51 ist in Figur 5 dargestellt. Das Sensorelement 51 liegt dicht an einer axialen Stirnseite des Zahnrads 20 an und bildet eine kompakte Baueinheit. In der Darstellung ist erkennbar, wie die Eingangswelle 10 mit ihrem dem Zahnrad 20 zugewandten Ende axial in den offenen Querschnitt des Grundkörpers 53 des Sensorelements 51 eingesetzt ist. Durch die oben erwähnte, am Ende der Eingangswelle 10 angebrachte, nicht im Einzelnen dargestellte Magnetanordnung, kann mit dem Sensorelement 51 eine relative Verdrehung der Eingangswelle 10 zur Ausgangswelle 12 erfasst werden.

Figur 8 gezeigt einen Längsschnitt in Richtung der Zahnradachse 200 durch die Ausgangswelle 12 ähnlich Figur 5, jedoch ist lediglich das Sensorelement 51 anstatt der vollständigen Sensoranordnung 5 dargestellt. Daraus geht insbesondere hervor, wie das aus Kunststoff bestehende Zahnrad 20 auf der bevorzugt aus Stahl bestehenden Ausgangswelle 12 angebracht ist. Die Verbindung kann vorzugsweise erfolgen, indem das Zahnrad 20 im Kunststoff-Spritzguss in einer Spritzgussform an die Ausgangswelle 20 angespritzt wird, d.h. die Ausgangswelle 12 mit dem schmelzflüssigen Kunststoffmaterial umspritzt wird. Dies kann, wie hier dargestellt, mittels eines Schirmangusses oder alternativ mittels eines Strang-angusses erfolgen. Dadurch wird eine feste stoffschlüssige Verbindung realisiert. Zusätzlich kann die Ausgangswelle 12 auf ihrem Außenumfang Formschlusselemente 121 aufweisen, beispielsweise Rippen oder Nuten, welche von dem Kunststoff ausgefüllt werden und für einen Formschluss mit dem Zahnrad 20 sorgen.

In Figur 9, 10 und 11 sind Schnittansichten aus Figur 8 vergrößert dargestellt, welche die Verbindung des aus Kunststoff bestehenden Grundkörpers 53 mit dem ebenfalls aus Kunststoff bestehenden Zahnrad 20 detailliert wiedergeben. Wie oben bereits erläutert, ist der rohrförmige Ansatz 55 des Sensorelements 51 formschlüssig auf den Vorsprung 210 axial aufgesetzt, wodurch eine Zentrierung bezüglich der Zahnradachse 200 erfolgt. Innerhalb der Öffnung des Ansatzes 55 bildet eine ringförmige, axiale Stirnfläche an einem radial nach innen vorstehenden Vorsprung 56 eine axiale Kontaktfläche 57. Die Kontaktfläche 57 ist mit einer ebenfalls ringförmigen, axialen Stirnfläche 211 des Zahnrads 20 verbunden, d.h. einer korrespondierenden Kontaktfläche 211 des Zahnrads 20. Mit anderen Worten bilden die Kontaktflächen 57 und 211 die Fügeflächen der Verbindung zwischen dem Kunststoff des Zahnrads 20 und des Sensorelements 51.

Die Erfindung sieht vor, dass das Sensorelement 51 stoffschlüssig mit dem Zahnrad 20 verbunden ist. In der gezeigten Ausführung erfolgt die stoffschlüssige Verbindung im Bereich der axial gegeneinander anliegenden Kontaktflächen 57 und 211, den Fügeflächen der stoffschlüssigen Verbindung.

In Figur 9 ist schematisch eine thermische Verschweißung mittels eines Lasers 6 dargestellt. Hierzu wird der Laserstrahl 61, der mit einer gepunkteten Linie angedeutet ist, axial in den Vorsprung 56 eingestrahlt. Dadurch, dass das Sensorelement 51 im Bereich dieses Vorsprungs 56 aus einem für das verwendete Laserlicht transparenten Kunststoffmaterial gefertigt ist, tritt der Laserstrahl 61 aus der Kontaktfläche 57 aus und trifft auf die dort anliegende Kontaktfläche 211 des Zahnrads 20. Dadurch, dass das Zahnrad 20 im Bereich dieser Kontaktfläche 211 aus einem für das verwendete Laserlicht intransparentem Kunststoff besteht, wird dort Wärme frei, die zu einem Aufschmelzen des Kunststoffs an beiden Oberflächen 57 und 211 und damit zu einer Verschweißung führt. Dadurch, dass für das Zahnrad 20 und das Sensorelement 51 hinsichtlich einer stoffschlüssigen Verbindung kompatible Kunststoffe eingesetzt werden, wird eine besonders fest stoffschlüssige Verbindung realisiert mit einer annähernd homogen durchgehenden Kunststoffstruktur.

Wie in Figur 10 dargestellt, ist es alternativ möglich, anstelle eines Laserstrahls ein Ultraschall-Schweißgerät 7 einzusetzen, mit dessen Sonotrode 71 die Kontaktfläche 57 axial gegen die Kontaktfläche 211 angedrückt und durch die mittels Ultraschall-Anregung eingekoppelte Reibungswärme mit dieser thermisch verschweißt wird. Im Ergebnis wird ebenfalls eine belastbare stoffschlüssige Verbindung zwischen dem Zahnrad 20 und dem Sensorelement 51 hergestellt.

In Figur 11 ist schematisch eine thermische Verschweißung mittels eines Lasers 6 dargestellt. Hierzu wird der Laserstrahl 61, der mit einer gepunkteten Linie angedeutet ist, radial eingestrahlt. Der Laserstrahl 61 trifft auf die dort anliegende Kontaktfläche 211 des Zahnrads 20. Dadurch, dass das Zahnrad 20 im Bereich dieser Kontaktfläche 211 und das Sensorelement 51 im Bereich der Kontaktfläche 57 aus einem für das verwendete Laserlicht intransparentem Kunststoff besteht, wird dort Wärme frei, die zu einem Aufschmelzen des Kunststoffs an beiden Oberflächen 57 und 211 und damit zu einer Verschweißung führt. Dadurch, dass für das Zahnrad 20 und das Sensorelement 51 hinsichtlich einer stoffschlüssigen Verbindung kompatible Kunststoffe eingesetzt werden, wird eine besonders feste stoffschlüssige Verbindung realisiert mit einer annähernd homogen durchgehenden Kunststoffstruktur.

### Bezugszeichenliste

- 1: Lenkwelle
- 10: Eingangswelle
- 12: Ausgangswelle
- 100: Kraftfahrzeuglenkung
- 102: Lenkrad
- 104: Lenkritzel
- 106: Zahnstange
- 108: Spurstange
- 110: lenkbares Rad
- 112: Hilfskraftunterstützung
- 114: Hilfskraftunterstützung
- 116: Hilfskraftunterstützung
- 118: Drehmomentsensor
- 118': Drehmomentsensor
- 120: kardanisches Gelenk
- 130: Drehstab
- 2: Vorrichtung zur Einbringung eines Hilfsdrehmoments
- 20: Zahnrad
- 200: Zahnradachse
- 210: Vorsprung
- 211: Kontaktfläche (Fügefläche)
- 22: Antriebsschnecke
- 24: Elektromotor
- 26: Wälzlager der Abtriebswelle des Elektromotors
- 28: Wälzlager für die Antriebsschnecke
- 29: Lagervorrichtung
- 220: Achse der Antriebsschnecke
- 240: Abtrieb des Elektromotors
- 3: Gehäuse
- 31: Gehäusedeckel
- 4: Lagervorrichtung
- 460: Ende der Achse 220
- 5: Sensoranordnung
- 51: Sensorelement
- 52: Baugruppe
- 53: Grundkörper
- 54: Statorbleche
- 55: Ansatz
- 56: Vorsprung
- 57: Kontaktfläche (Fügefläche)
- 6: Laser
- 61: Laserstrahl
- 7: Ultraschall-Schweißgerät
- 71: Ultraschall-Sonotrode

## Patentansprüche

1. Vorrichtung (2) zur Einbringung eines Hilfsdrehmoments und/oder eines zusätzlichen Lenkwinkels in eine elektro-mechanische Hilfskraftlenkung (100), umfassend ein auf einer Lenkwelle (1) drehfest angebrachtes Zahnrad (20), welches mit einem Antriebselement (22) eines Antriebsmotors (24) in Wirkverbindung steht und von diesem drehend antreibbar ist, und einem Sensorelement (51), welches drehfest mit der Lenkwelle (1) verbunden ist,
wobei das Sensorelement (51) und das Zahnrad (20) an Kontaktflächen (57, 211) miteinander verbunden sind,
wobei das Sensorelement (51) stoffschlüssig mit dem Zahnrad (20) verbunden ist, wobei das Zahnrad (20) und das Sensorelement (51) im Bereich der Kontaktflächen (57, 211) axial gegeneinander anliegen,
**dadurch gekennzeichnet,**
**dass** das Zahnrad (20) und das Sensorelement (51) jeweils zumindest im Bereich der Kontaktfläche (57, 211) aus Kunststoff ausgebildet sind und dass das Zahnrad (20) mit dem Sensorelement (51) verschweißt ist.

2. Vorrichtung nach Anspruch 1, **dadurch gekennzeichnet, dass** das Zahnrad (20) als Kunststoff-Spritzgussteil auf die Lenkwelle (1) aufgespritzt ist.

3. Vorrichtung nach Anspruch 1, **dadurch gekennzeichnet, dass** das Sensorelement (51) eine ringförmige Grundform aufweist, die koaxial auf der Lenkwelle (1) angeordnet ist und eine sich im Wesentlichen ringförmig erstreckende Kontaktfläche (57) aufweist.

4. Vorrichtung nach Anspruch 1, **dadurch gekennzeichnet, dass** das Sensorelement (51) und das Zahnrad (20) formschlüssig miteinander in Eingriff bringbare Formschlusselemente (210) aufweisen.

5. Vorrichtung nach Anspruch 1, **dadurch gekennzeichnet, dass** das Zahnrad (20) und das Sensorelement (51) in einem Gehäuse (3) angeordnet sind, an dem relativ zum Sensorelement (51) feststehend eine Baugruppe (52) einer Sensoranordnung (5) positioniert ist.

6. Verfahren zur Herstellung einer Vorrichtung (2) zur Einbringung eines Hilfsdrehmoments und/oder eines zusätzlichen Lenkwinkels in eine elektro-mechanische Hilfskraftlenkung (100), wobei das Verfahren folgende Verfahrensschritte umfasst:
(A) Bereitstellen eines zumindest im Bereich einer Kontaktfläche (211) aus Kunststoff ausgebildeten Zahnrades (20) für eine elektro-mechanische Hilfskraftlenkung,
(B) Bereitstellen eines zumindest im Bereich einer Kontaktfläche (57) aus Kunststoff ausgebildeten Sensorelements (51) für eine Sensoranordnung (5),
(C) Positionierung des Sensorelements (51) an oder auf dem Zahnrad (20) in einer vorbestimmten Anordnungsposition,
(D) Herstellung einer unlösbaren stoffschlüssigen Verbindung zwischen dem Sensorelement (51) und dem Zahnrad (20), wobei das Zahnrad (20) und das Sensorelement (51) im Bereich der Kontaktflächen (57, 211) axial gegeneinander anliegen, wobei das Zahnrad (20) mit dem Sensorelement (51) verschweißt wird.

## Claims

1. Apparatus (2) for the introduction of an auxiliary torque and/or an additional steering angle into an electromechanical power steering system (100), comprising a gearwheel (20) which is attached fixedly on a steering shaft (1) as to rotate with it, is operatively connected to a drive element (22) of a drive motor (24) and can be driven rotationally by the latter, and a sensor element (51) which is connected fixedly to the steering shaft (1) as to rotate with it, the sensor element (51) and the gearwheel (20) being connected to one another on contact faces (57, 211), the sensor element (51) being connected to the gearwheel (20) in a substance-to-substance manner, the gearwheel (20) and the sensor element (51) bearing axially against one another in the region of the contact faces (57, 211), **characterized in that** the gearwheel (20) and the sensor element (51) are configured from plastic in each case at least in the region of the contact face (57, 211), and **in that** the gearwheel (20) is welded to the sensor element (51).

2. Apparatus according to Claim 1, **characterized in that** the gearwheel (20) is moulded as a plastic injection moulded part onto the steering shaft (1).

3. Apparatus according to Claim 1, **characterized in that** the sensor element (51) has an annular basic shape which is arranged coaxially on the steering shaft (1) and has a contact face (57) which extends substantially in an annular manner.

4. Apparatus according to Claim 1, **characterized in that** the sensor element (51) and the gearwheel (20) have positively locking elements (210) which can be brought into engagement with one another in a positively locking manner.

5. Apparatus according to Claim 1, **characterized in that** the gearwheel (20) and the sensor element (51) are arranged in a housing (3), on which an assembly (52) of a sensor arrangement (5) is positioned in a stationary manner relative to the sensor element (51).

6. Method for producing an apparatus (2) for the introduction of an auxiliary torque and/or an additional steering angle into an electromechanical power steering system (100), the method comprising the following method steps:
(A) providing of a gearwheel (20), which is configured from plastic at least in the region of a contact face (211), for an electromechanical power steering system,
(B) providing of a sensor element (51), which is configured from plastic at least in the region of a contact face (57) for a sensor arrangement (5),
(C) positioning of the sensor element (51) at or on the gearwheel (20) in a predefined arrangement position,
(D) producing of a non-releasable substance-to-substance joined connection between the sensor element (51) and the gearwheel (20), the gearwheel (20) and the sensor element (51) bearing axially against one another in the region of the contact faces (57, 211), the gearwheel (20) being welded to the sensor element (51).

## Revendications

1. Dispositif (2) destiné à introduire un couple d'assistance et/ou un angle de braquage supplémentaire dans une direction assistée électromécanique (100), comprenant une roue dentée (20) fixée à un arbre de direction (1) de manière solidaire en rotation et qui est en relation active avec un élément d'entraînement (22) d'un moteur d'entraînement (24) et peut être entraînée en rotation par celui-ci, et un élément capteur (51) qui est relié à l'arbre de direction (1) de manière solidaire en rotation,
l'élément capteur (51) et la roue dentée (20) étant reliés l'un à l'autre au niveau de surfaces de contact (57, 211),
l'élément capteur (51) étant relié à la roue dentée (20) par liaison de matière,
la roue dentée (20) et l'élément capteur (51) étant appliqués axialement l'un contre l'autre dans la zone des surfaces de contact (57, 211),
**caractérisé en ce que** la roue dentée (20) et l'élément capteur (51) sont respectivement réalisés en matière plastique au moins dans la zone de la surface de contact (57, 211), et **en ce que** la roue dentée (20) est soudée à l'élément capteur (51).

2. Dispositif selon la revendication 1, **caractérisé en ce que** la roue dentée (20) est surmoulée sur l'arbre de direction (1) sous la forme d'une pièce moulée par injection en plastique.

3. Dispositif selon la revendication 1, **caractérisé en ce que** l'élément capteur (51) présente une forme de base annulaire qui est disposée coaxialement sur l'arbre de direction (1) et présente une surface de contact (57) s'étendant de manière substantiellement annulaire.

4. Dispositif selon la revendication 1, **caractérisé en ce que** l'élément capteur (51) et la roue dentée (20) présentent des éléments à complémentarité de forme (210) pouvant être mis en prise les uns avec les autres par complémentarité de forme.

5. Dispositif selon la revendication 1, **caractérisé en ce que** la roue dentée (20) et l'élément capteur (51) sont disposés dans un boîtier (3) sur lequel est positionné un sous-ensemble (52) d'un ensemble de capteur (5), de manière fixe par rapport à l'élément capteur (51).

6. Procédé de fabrication d'un dispositif (2) permettant d'introduire un couple d'assistance et/ou un angle de braquage supplémentaire dans une direction assistée électromécanique (100), le procédé comprenant les étapes de procédé suivantes consistant à :
(A) fournir une roue dentée (20) réalisée en matière plastique au moins dans la zone d'une surface de contact (211) pour une direction assistée électromécanique,
(B) fournir un élément capteur (51) réalisé en matière plastique au moins dans la zone d'une surface de contact (57) pour un ensemble de capteur (5),
(C) positionner l'élément capteur (51) au niveau de ou sur la roue dentée (20) dans une position de disposition prédéterminée,
(D) établir un assemblage par liaison de matière inamovible entre l'élément capteur (51) et la roue dentée (20), la roue dentée (20) et l'élément capteur (51) étant appliqués axialement l'un contre l'autre dans la zone des surfaces de contact (57, 211), la roue dentée (20) étant soudée à l'élément capteur (51).
